(19) **Europäisches Patentamt / European Patent Office / Office européen des brevets**

(11) **EP 1 488 833 B1**

(12) **EUROPEAN PATENT SPECIFICATION**

(45) Date of publication and mention
of the grant of the patent:
**08.10.2008   Bulletin 2008/41**

(21) Application number: **03703204.2**

(22) Date of filing: **06.02.2003**

(51) Int Cl.:
*A63F 13/00* (2006.01)

(86) International application number:
**PCT/JP2003/001225**

(87) International publication number:
**WO 2003/080203 (02.10.2003 Gazette 2003/40)**

(54) **GAME APPARATUS, PROGRAM, INFORMATION RECORDING MEDIUM, PROGRAM DISTRIBUTION METHOD, AND PROGRAM DISTRIBUTION APPARATUS**

SPIELGERÄT, PROGRAMM, INFORMATIONSAUFZEICHNUNGSMEDIUM, PROGRAMMVERTEILUNGSVERFAHREN UND PROGRAMMVERTEILUNGSGERÄT

DISPOSITIF DE JEU, PROGRAMME, SUPPORT D'ENREGISTREMENT D'INFORMATIONS, PROCEDE DE DISTRIBUTION DE PROGRAMME, ET DISPOSITIF DE DISTRIBUTION DE PROGRAMME

(84) Designated Contracting States:
**DE FR GB**

(30) Priority: **22.03.2002   JP 2002080272**

(43) Date of publication of application:
**22.12.2004   Bulletin 2004/52**

(73) Proprietor: **Konami Digital Entertainment Co., Ltd.**
**Tokyo 107-8324 (JP)**

(72) Inventor: **OE, Osamu,**
**Konami Computer Entertainm. Studios Inc**
**Minato-ku,**
**Tokyo 106-6113 (JP)**

(74) Representative: **Pluckrose, Anthony William et al**
**BOULT WADE TENNANT**
**Verulam Gardens**
**70 Gray's Inn Road**
**London WC1X 8BT (GB)**

(56) References cited:
**JP-A- 8 126 022**        **JP-A- 2000 279 638**
**JP-A- 2002 049 938**        **US-A1- 2001 005 446**

- **PATENT ABSTRACTS OF JAPAN vol. 018, no. 036 (P-1678), 19 January 1994 (1994-01-19) & JP 05 265443 A (NEC CORP), 15 October 1993 (1993-10-15)**
- **YOSHIAKI ENDO: 'Sega.Consumer.Histry', 27 February 2002, ENTERBRAIN INC. pages 170 - 173, XP002968809 First Edition**

## Description

TECHNICAL FIELD

The present invention relates to a game device, program, information storage medium, program distribution method and program distribution device, and particularly relates to technology for adjusting brightness of a game screen.

BACKGROUND ART

Portable game equipment that is equipped with a liquid crystal display device and driven by batteries is known in the related art. According to such portable game equipment, it is possible for games to readily be played at any time and in any place.

There are also cases where a liquid crystal display device for this kind of portable game equipment is not provided with a backlight in order to extend the lifespan of the batteries. However, when an image is displayed using a liquid crystal display device not equipped with a backlight, sufficient visibility cannot be obtained.

In order to resolve the aforementioned problems, it is an advantage of the present invention that it provides a game device, program, information storage medium, program distribution method and program distribution device enabling adjustment of brightness of a game screen of, for example, portable game equipment, etc., and being capable of increasing visibility of a game screen.

Patent Abstracts of Japan Vol. 018, no.036 (P-1678), 19 January 1994 (1994-01-19) (corresponding to Japanese Patent Application no. JP 05 265443) discloses a method of providing 'depth queuing' for a 3-D image. This method adjusts the brightness of different pixels on a pixel by pixel basis based on the depth value for each pixel.

DISCLOSURE OF INVENTION

In order to resolve the aforementioned problems, a game device of the present invention is provided as recited in claim 1 of the accompanying claims.

In accordance with a further aspect of the present invention there is provided a game device as recited in claim 7 of the accompanying claims.

In accordance with a further aspect of the present invention there is provided a method for adjusting brightness of a game screen as recited in claim 10 of the accompanying claims.

In accordance with a further aspect of the present invention there is provided a method for adjusting brightness of a game screen as recited in claim 11 of the accompanying claims.

In accordance with another aspect of the present invention there is provided a program as recited in claim 12 of the accompanying claims adapted to run on a computer such as portable game equipment, household game equipment, business game equipment, a personal computer, portable telephone, or portable information terminal etc..

Moreover, an information storage medium of the present invention is for storing a program as recited in claim 12 of the accompanying claims.

In the present invention, brightness of the game screen is specified by the brightness specifying means. The palette data acquisition means acquires palette data corresponding to the specified brightness. Palette data is data referred to as a color look-up table and has palette numbers and color information that are made to correspond to each other. In the present invention, palette data corresponding to the specified brightness can be acquired. Images can then be displayed at the game screen based on the acquired palette data and the image data stored in the image data storage means. According to the present invention, a game device enabling adjustment of brightness of a game screen and capable of increasing visibility of a game screen can be provided.

In one aspect of the present invention, the palette data acquisition means acquires palette data for a brightness specified by the brightness specifying means from palette data for a reference brightness and the palette data for one or more brightnesses after correction generated based on palette data for the reference brightness. In doing this, it is possible to prepare palette data corresponding to each brightness in a relatively straightforward manner.

This aspect may also further comprise palette data storage means for storing palette data for a reference brightness and palette data for one or more brightnesses after correction generated based on palette data for the reference brightness. In doing so, it is possible for palette data corresponding to the specified brightness to be acquired rapidly from the palette data storage means.

Alternatively, there may further be provided palette data storage means for storing palette data for a reference brightness, with the palette data acquisition means comprising means for generating palette data for a brightness specified by the brightness. In doing this, it is possible to save the storage capacity for the palette data.

In accordance with an aspect of the present invention, brightness of the game screen is specified by the brightness specifying means. Further, palette data is stored in the palette data storage means. The palette data is such that palette numbers and color information are made to correspond to each other. All or some of the palette numbers belong to one of the plurality of palette number groups, respectively. Further, the plurality of palette number groups correspond to respectively different brightnesses.

In the present invention, image data is stored in the image data storage means. The image data makes palette numbers belonging to one of a plurality of palette number groups correspond to each pixel constituting an image. Further, in the present invention, palette numbers of the image data are changed to palette numbers belonging to palette number group corresponding to brightnesses specified by the brightness specifying means. Images can then be displayed at the game screen based on image data for which the palette numbers have been changed and palette data stored in the palette data storage means. According to the present invention, a game device enabling adjustment of brightness of a game screen and capable of increasing visibility of a game screen can be provided.

Further, in one aspect of the present invention, color information made to correspond with at least one of the plurality of palette number groups is generated based on color information made to correspond with palette numbers belonging to another palette number group. In doing this, it is possible to prepare palette data corresponding to each brightness in a relatively straightforward manner.

BRIEF DESCRIPTION OF DRAWINGS

FIG. 1 is a view showing the external appearance of portable game equipment of an embodiment of the present invention.
FIG. 2 is a view showing a hardware configuration for portable game equipment of an embodiment of the present invention.
FIG. 3 is a view showing a test pattern image for used in brightness adjustment.
FIG. 4 is a functional block diagram of the portable game equipment of the embodiment of the present invention.
FIG. 5 is a view showing an example of image data and palette data.
FIG. 6 is a flowchart showing brightness adjustment processing.
FIG. 7 is a flowchart showing game image display processing.
FIG. 8 is a functional block diagram of the portable game equipment of a further embodiment of the present invention.
FIG. 9 is a view showing an example of image data and palette data of the further embodiment.
FIG. 10 is a flowchart showing brightness adjustment processing of the further embodiment.
FIG. 11 is a flowchart showing game image display processing of the further embodiment.
FIG. 12 is a view showing an overall configuration for a program distribution system of a further embodiment of the present invention.

BEST MODE FOR CARRYING OUT THE INVENTION

The following is a detailed description based on the drawings of embodiments of the present invention.

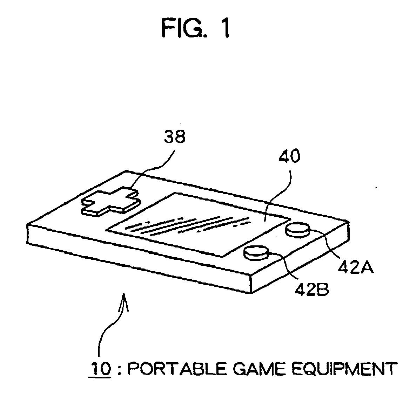

FIG. 1 is a view showing the external appearance of portable game equipment used as a game device in the embodiments of the present invention. Portable game equipment 10 shown in the same is equipped at its surface with a liquid crystal display panel 40, a cross key 38 and buttons 42A and 42B, with it being possible for a player to play the game in any location as a result of the equipment being battery driven. A power supply switch etc. and other operating members (not shown) are also fitted to the portable game equipment 10 shown in FIG. 1. Further, a game program executed by the portable game equipment 10 shown in FIG. 1 is one embodiment of a program of the present invention.

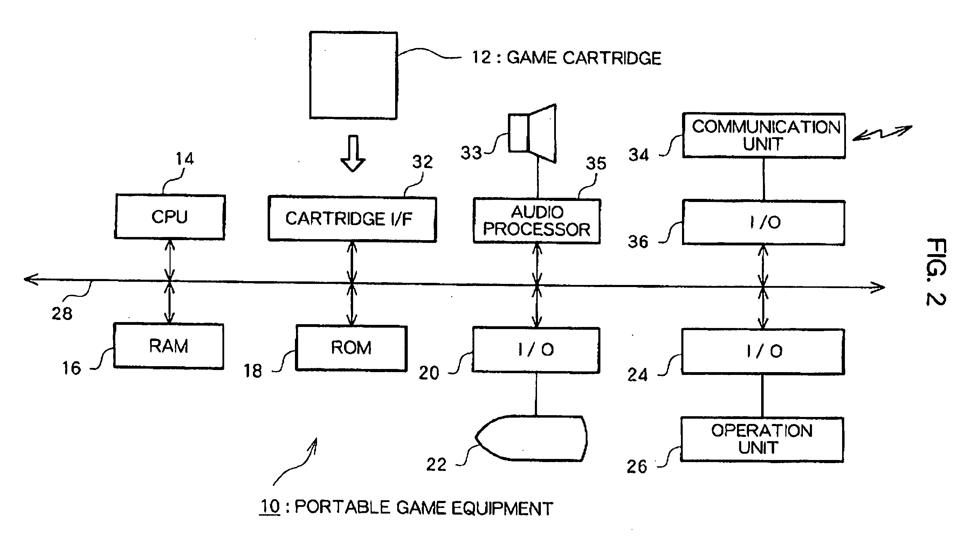

FIG. 2 is a view showing a hardware configuration for portable game equipment 10. With the game device of the embodiment of the present invention, a game cartridge 12 with ROM (Read Only Memory) built-in is installed in a cartridge interface 32, and a game program stored in this ROM is read out on the side of the portable game equipment 10 and is executed. Further, the game cartridge 12 is used to supply a game program to the portable game equipment 10 but any other information storage media such as a CD-ROM (Compact Disk-Read Only Memory) or DVD (Digital Versatile Disk; trademark) etc. may also be used. Further, it is possible to provide game programs to the portable game equipment 10 via communication networks such as the Internet etc. and it is also possible to supply game programs to the portable game equipment 10 from floor-type game equipment or personal computers etc. by utilizing various types of data communication such as infra red communication or serial communication, etc.

In the portable game equipment 10, a CPU (Central Processing Unit) 14, RAM (Random Access Memory) 16, ROM 18, input/output interfaces 20, 24, 36, and audio processing unit 35 are connected to a bus 28 so as to be capable of mutual data communication. A communication unit 34 is connected to the input/output interface 36, and a display 22 is connected to the input/output interface 20. Moreover, the operating unit 26 is connected to the input/output interface 24. A speaker 33 is connected to the audio processing unit 35. These are contained in a housing together with a battery, are driven by the battery, and are portable.

The CPU 14 controls each part of the portable game equipment 10 based on an operating system (OS) stored in the ROM 18 and a game program read from the game cartridge 12. The bus 28 is for exchanging addresses and data with each part of the portable game equipment 10. Further, a game program read out from the game cartridge 12 is written to the RAM 16 as necessary. A work area for the CPU 14 is also ensured at the RAM 16. The display (game screen) 22 is constituted by the liquid crystal display panel 40 and displays and outputs game images generated by the CPU 14. The audio processing unit 35 outputs game music and sound effects generated by the CPU 14 from the speaker 33.

The input/output interfaces 20, 24 and 36 relay data communication between the CPU 14, and display 22, operation unit 26, cartridge interface 32 and communication unit 34, respectively. The operation unit 26 is input means for enabling the player to perform game operations and comprises the cross key 38 and buttons 42A, 42B etc. shown in FIG. 1. The cartridge interface 32 has an opening for housing the game cartridge 12, and has a signal input/output terminal provided at an inner part. Exchanging of signals with the game cartridge 12 is then achieved by pushing the game cartridge 12 into the opening so that the signal input/output terminal and the terminal of the game cartridge 12 (not shown in the drawings) are mutually connected. The communication unit 34 is for carrying out data communication with other game devices via, for example, a communication cable.

In the following, a description is given of specific technology for implementing a game device capable of adjusting brightness of the game screen using the portable game equipment 10 having a configuration of the present invention.

When the power switch is turned on at the portable game equipment 10 with the game cartridge 12 installed in the cartridge interface 32, a start screen starts to be depicted at the liquid crystal display panel 40. When an option of "brightness adjustment" is selected from the menu displayed at the start screen, it is possible for a player to adjust the brightness of the game screen.

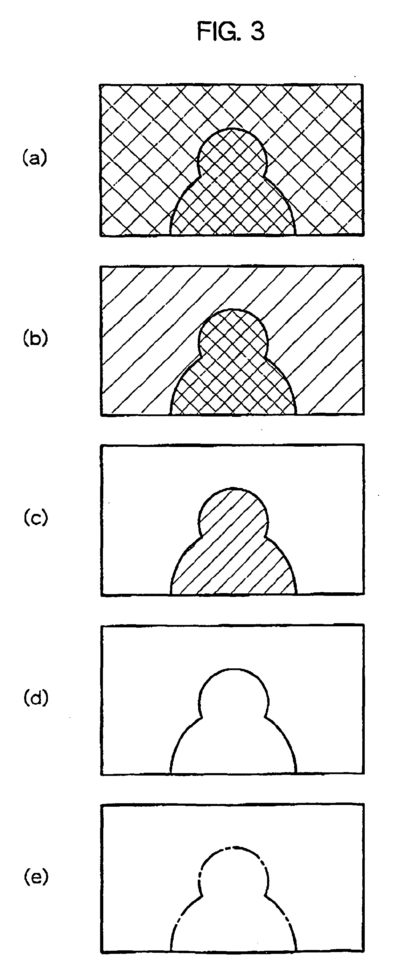

FIG. 3 is a view showing an example of a test pattern image depicted at the liquid crystal display panel 40 in order to perform brightness adjustment. FIG. 3(a) to FIG. 3(e) are test pattern images selectively displayed at the liquid crystal display panel 40. Of these, FIG. 3(a) shows a test pattern image for the lowest brightness (brightness n=0). FIG. 3(b) then shows a test pattern image of the next lowest brightness (brightness n=1). FIG. 3(c) shows a test pattern image of intermediate brightness (brightness n=2). FIG. 3(d) shows a test pattern image of a brightness one stage higher than the test pattern image of FIG. 3(c). FIG. 3(e) shows a test pattern image for the highest brightness (brightness n=4).

When a player selects the "brightness adjustment" option, first, the test pattern image displayed in FIG. 3(a) is displayed. When a player operates the cross key 38 in an upward direction, the brightness of the test pattern image is raised one step at a time, and the test pattern images displayed in FIG. 3(b) to FIG. 3(e) are displayed in order. When the player operates the cross key 38 in the downward direction, the brightness of the test pattern image is lowered by one step. For example, when a player operates the cross key 38 in the downward direction with the test pattern image shown in FIG. 3 (e) displayed, the test pattern images shown in FIG. 3(d), FIG. 3(c), FIG. 3(b) and FIG. 3(a) are displayed in order.

When the player pushes the button 42A with any of the test pattern images displayed, a brightness n corresponding to this test pattern image is stored in the RAM 16, etc. When the portable game equipment 10 or the game cartridge 12 is equipped with non-volatile memory such as EEPROM etc., it is also possible to store the brightness n in the non-volatile memory. After this, when the start screen is returned to and the player instructs the game to start, the game is started, and a game screen of a brightness corresponding to the brightness n stored in the RAM 16 etc. is displayed.

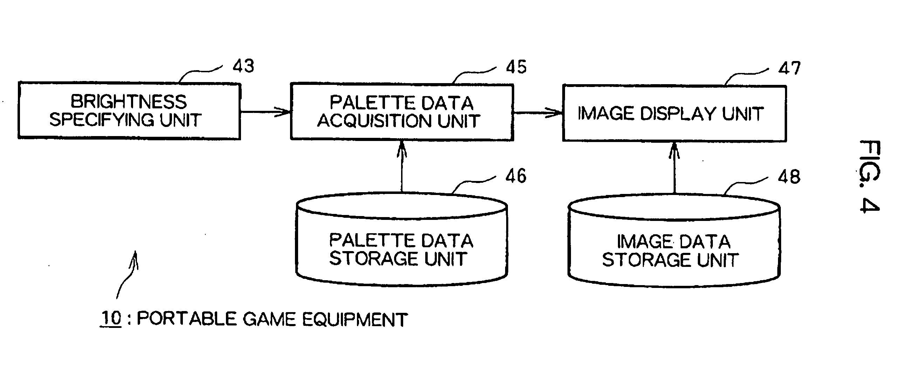

FIG. 4 is a functional block view featuring functions implemented by the portable game equipment 10 that relate to the present invention. As shown in FIG. 4, a brightness specifying unit 43, palette data acquisition unit 45, image display unit 47, palette data storage unit 46 and image data storage unit 48 are realized at the portable game equipment 10. These functions are implemented as a result of the portable game equipment 10 executing the program stored in the game cartridge 12.

Of these, the brightness specifying unit 43 is implemented centered on the operation unit 26 and is for the player to designate brightness of the game screen. Here, a player designates brightness while looking at a test pattern image displayed at the liquid crystal display panel 40 but it is also possible to designate brightness of the game screen in accordance with an output of a contrast sensor etc. The palette data acquisition unit 45 is implemented centered on the CPU 14 and acquires palette data corresponding to brightness designated by the brightness specifying unit 43.

The palette data storage unit 46 is implemented centered on the game cartridge 12 or the RAM 16 and stores palette data corresponding to reference brightness (brightness n=0) and palette data corresponding to brightnesses (brightness n=1 to 4) after correction generated based on pallet data corresponding to the reference brightness. The palette data acquisition unit 45 then acquires palette data by reading palette data corresponding to the brightness designated by the brightness specifying unit 43 from the palette data storage unit 46.

Further, the image data storage unit 48 is implemented centered on the game cartridge 12 or the RAM 16 and stores image data. Moreover, the image display unit 47 displays an image at the liquid crystal display panel 40 constituting the game screen based on image data stored in the image data storage unit 48 and palette data acquired by the palette data acquisition unit 45.

It is also possible to store just palette data corresponding to the reference brightness (n=0) in the palette data storage unit 46 and have the palette data acquisition unit 45 generate palette data corresponding to the brightness designated by the brightness specifying unit 43 based on palette data stored in the palette data storage unit 46.

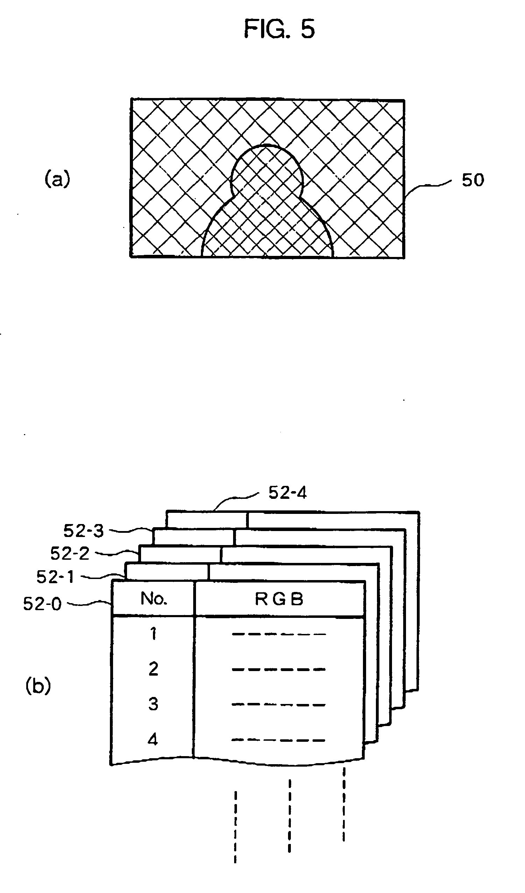

FIG. 5(a) is a view showing an example of image data stored in the image data storage unit 48. Palette numbers are stored in this image data 50 so as to correspond with each pixel constituting the image. Which kind of color each palette number stored in the image data 50 is, is determined based on palette data shown in FIG. 5 (b). At the portable game equipment 10, as shown in FIG.

5(b), five items of palette data 52-0 to 52-4 are made to correspond to one item of image data. These items of palette data 52-0 to 52-4 are stored in the palette data storage unit 46. Each item of palette data 52 is for storing color information (RGB values) made to correspond with palette numbers, with palette data 52-i corresponding with brightness n=i (i=0 to 4).

Here, palette data 52-i (i=1 to 4) is generated based on palette data 52-0. Namely, when it is taken that color information (R(0)m, G(0)m, B(0)m) made to correspond with palette number m is stored for palette data 52-0, and color information (R(i)m, G(i)m, B(i)m) made to correspond to palette number m is stored for palette data 52-i, then this brings about the following relationship (i=1 to 4; m=1 to 256).

$$R(i)m = R(0)m \times (1 + 0.2 \times i)$$

$$G(i)m = G(0)m \times (1 + 0.2 \times i)$$

$$B(i)m = B(0)m \times (1 + 0.2 \times i)$$

Namely, at palette data 52-1, color information where brightness made to correspond to the same palette number is increased by a prescribed proportion (20% in this case) compared to the palette data 52-0 is stored. Further, color information where the brightness is increased by a prescribed proportion (40% in this case) is stored at the palette data 52-2. Moreover, color information where the brightness is increased by a prescribed proportion (60% in this case) is stored at the palette data 52-3. Still further, color information where the brightness is increased by a prescribed proportion (80% in this case) is stored at the palette data 52-4. Here, R(i)m, G(i)m, and B(i)m are integers and an upper limit and lower limit are established.

In the following, a still more specific description is given of the processing of the portable game equipment 10 based on the flowcharts.

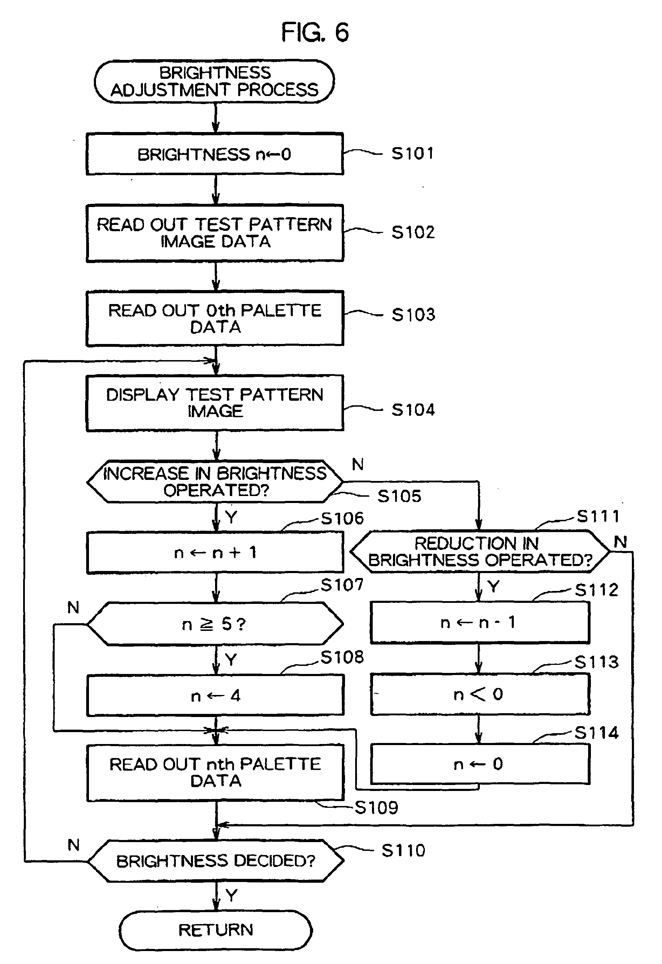

FIG. 6 is a flowchart showing a brightness adjustment process implemented by the portable game equipment 10. As shown in FIG. 6, the brightness adjustment processing is carried out by the brightness specifying unit 43. In this processing, first, a variable n expressing brightness is set to zero (S101). Next, test pattern image data is read out from the game cartridge 12 (S102). Further, palette data 52-0 corresponding to brightness n=0 is read from the game cartridge 12 (S103). A test pattern image is then displayed based on test pattern image data read out in S102 and palette data 52-0 read out in S103 (S104).

Next, a determination is made as to whether or not the cross key 38 has been operated in the upward direction (S105). When an operation in the upward direction is determined, the brightness n is incremented by 1 (S106). At this time, if the value for the brightness n is 5 or more (S107), an upper limit value of 4 is set (S108). Palette data 52-n corresponding to the brightness n is then read out using the updated value for the brightness n (S109). After this, a test pattern image is displayed based on the palette data 52-n read out in S109 and the test pattern image data read out in S102 (S104) unless the button 42A for deciding brightness has been pushed (S110).

On the other hand, in S105, when it is determined that the cross key 38 has not been operated in the upward direction, it is determined whether or not the cross key 38 has been operated in a downward direction (S111). When an operation in the downward direction is determined, the brightness n is decremented by 1 (S112). At this time, if the value for the brightness n is zero or less (S113), a lower limit value of 0 is set (S114). Palette data 52-n corresponding to the brightness n is then read out using the updated value for the brightness n (S109). After this, a test pattern image is displayed based on the palette data 52-n read out in S109 and the test pattern image data read out in S102 (S104) unless the button 42A for deciding brightness has been pushed (S110).

Further, in S111, when it is determined that the cross key 38 is not operated in the downward direction, a determination is made as to whether the cross key 38 has been operated again in the upward direction (S105) unless the button 42a for deciding the brightness has been pressed (S110).

As described above, in the brightness adjustment process, the integer n expressing the brightness can be set in accordance with operation of the cross key 38 and button 42A by the player while presenting a test pattern image corresponding to each brightness to the player.

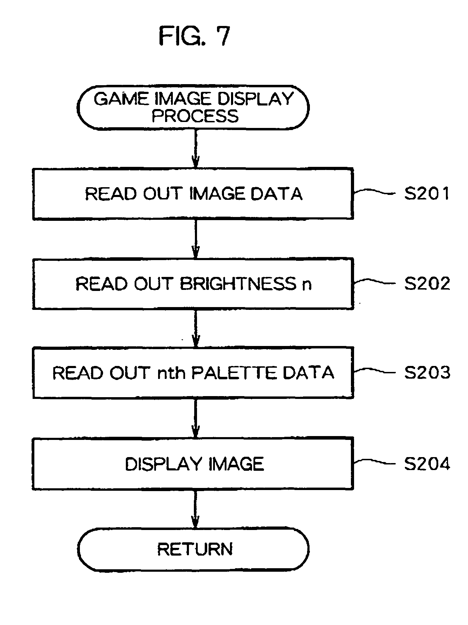

Next, a description is given of processing for displaying game images at the liquid crystal display panel 40 after starting the game. FIG. 7 is a flowchart showing game image display processing. As shown in FIG. 7, in this process, first, the image display unit 47 reads image data from the image data storage unit 48 (S201). This image data can be specified by a main routine (not shown). Next, the palette data acquisition unit 45 reads out the brightness n stored in the brightness specifying unit 43 (S201). The brightness n is decided by the brightness adjustment process described above and is a value held in RAM 16 contained in the brightness specifying unit 43. The palette data acquisition unit 45 then reads out nth palette data (for example, palette data 52-n) from the palette data storage unit 46 based on a value for the brightness n read out in this manner (S203). The image display unit 47 then displays game images at the liquid crystal display panel 40 based on the nth palette data read out by the palette data acquisition unit 45 and image data read out from the image data storage unit 48 in S201.

As described in the above, it is possible to display the game screen in accordance with brightness n specified by the brightness specifying unit 43. In this way, it is possible to display the game screen with sufficient visibility even when the liquid crystal display panel 40 is not equipped with a backlight.

In the above description, a plurality of palette data corresponding to different brightnesses is prepared in advance in the palette data storage unit 46, or palette data corresponding to one reference brightness (brightness n=0) is prepared in advance in the palette data storage unit 46, and palette data corresponding to other brightnesses is generated based on this palette data. However, it is possible to adjust brightness of the game screen even with just one item of palette data.

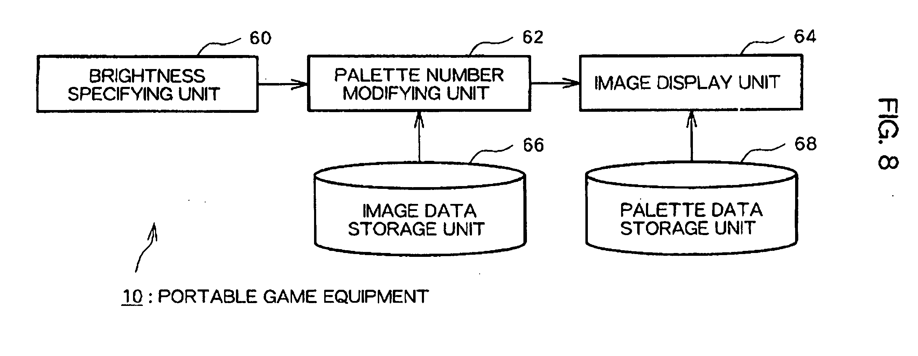

FIG. 8 is a functional block view of the portable game equipment 10 in the case of adjusting the brightness of the game screen using one item of palette data. This functional block view is centered on functions relating to the present invention. These functions shown in FIG. 8 are also implemented as a result of the portable game equipment 10 executing the program stored in the game cartridge 12.

In this case, the portable game equipment 10 shown in FIG. 8 is realized by a brightness specifying unit 60, a palette number modifying unit 62, an image display unit 64, an image data storage unit 66, and a palette data storage unit 68.

Here, the brightness specifying unit 60 is implemented centered on the operation unit 26 so as to enable the player to designate brightness of the game screen. Further, the palette data storage unit 68 is implemented centered on the game cartridge 12 or the RAM 16 and stores palette data. Palette data is constituted by palette numbers and color information that are made to correspond to each other and all or some of the palette numbers belong to one of a plurality of palette number groups corresponding respectively to different brightnesses. Color information which corresponds to palette numbers belonging to palette number groups corresponding to brightness n=1 to 4 respectively is generated based on color information which corresponds to palette numbers belonging to palette number groups corresponding to brightness n=0.

Further, the image data storage unit 66 is implemented centered on the game cartridge 12 or the RAM 16 and stores image data. This image data makes palette numbers belonging to one (brightness n=0) of the plurality of palette number groups correspond to each pixel constituting an image. Further, with the image data stored at the image data storage unit 66, the palette number modifying unit 62 changes palette numbers made to correspond to each pixel constituting an image to palette numbers belonging to palette number group corresponding to brightness specified by the brightness specifying unit 60. The image display unit 64 is implemented centered on the liquid crystal display panel 40 and displays images based on image data with palette numbers changed by the palette number modifying unit 62 and palette data stored in the palette data storage unit 68.

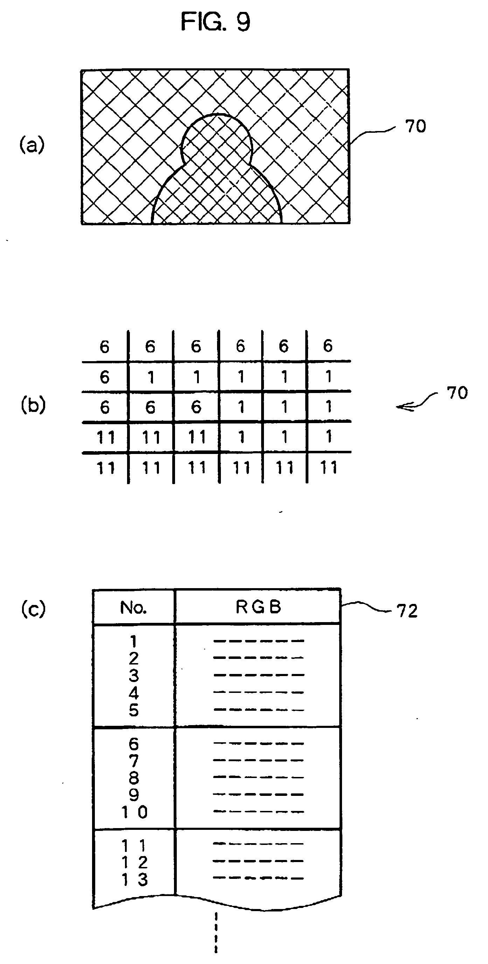

FIG. 9(a) is a view showing an example of image data stored in the image data storage unit 66. As shown in the schematic view of FIG. 9(b), this image data 70 stores palette numbers (1, 6, 11, . . . ) made to correspond to each pixel constituting an image. Which kind of color each palette number stored in the image data 70 is, is determined based on palette data 72 shown in FIG. 9(c). Palette data 72 shown in FIG. 9(c) prepares five brightnesses for one color, and consecutive palette numbers are made to correspond to these in order of brightness. Namely, the palette number 5m - 4 (m=1, 2, 3, . . . ) forms a 0th palette group made to correspond to brightness n=0. Further, the palette number 5m - 3 (m=1, 2, 3, . . . ) forms a 1st palette group made to correspond to brightness n = 1. Moreover, the palette number 5m - 2 (m=1, 2, 3, . . . ) forms a 2nd palette group made to correspond to brightness n = 2. Still further, the palette number 5m - 1 (m=1, 2, 3, . . . ) forms a 3rd palette group made to correspond to brightness n = 3. Yet further, the palette number 5m (m=1, 2, 3, . . . ) forms a 4th palette group made to correspond to brightness n = 4. Color information for the first to fourth palette groups is obtained by increasing brightness of the color information for the 0th palette group by prescribed proportions (which in this case are 20%, 40%, 60% and 80%).

Namely, when color information corresponding to palette number 5m - 4 belonging to the 0th palette group is taken to be (R(0)m, G(0)m, B(0)m), and color information corresponding to palette number 5m - 4 + j belonging to the jth palette group is taken to be (R(j)m, G(j)m, B(j)m), then these have the following relationship (m = 1, 2, 3 . . . ; j = 1, 2, 3, 4). Here, R(j)m, G(j)m, and B(j)m are integers, and upper and lower limits are set.

$$R(j)m = R(0)m \times (1+0.2 \times j)$$

$$G(j)m = G(0)m \times (1+0.2 \times j)$$

$$B(j)m = B(0)m \times (1+0.2 \times j)$$

As described above, image data stored in the image data storage unit 66 makes palette number 5m - 4 (m = 1, 2, 3, . . . ) belonging to the 0th palette correspond to each pixel. The palette number modifying unit 62 has a function for reading out image data stored in the image data storage unit 66 and changing these palette numbers to palette numbers belonging to other palette groups (first to fourth).

The following is a detailed description of processing for the portable game equipment 10 for adjusting brightness while using one item of palette data based on the flowcharts.

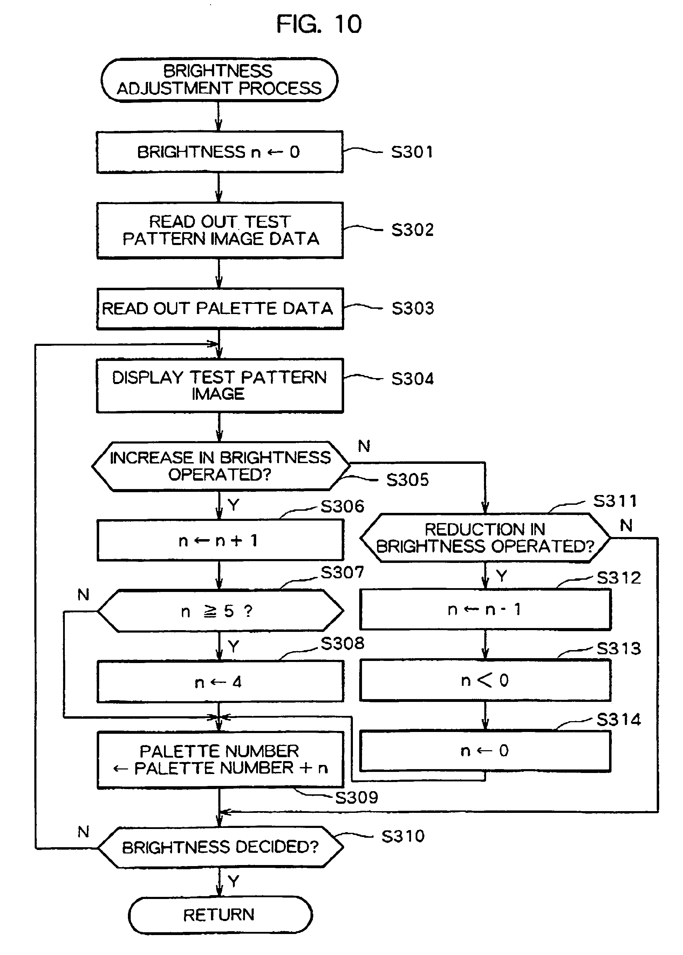

FIG. 10 is a flowchart showing a brightness adjustment process implemented by the portable game equipment 10. As shown in FIG. 10, the brightness adjustment processing is carried out by the brightness specifying unit 60. In this processing, first, a variable n expressing brightness is set to zero (S301). Next, test pattern image data is read out from the game cartridge 12 (S302). Further, palette data 72 is read out from the game cartridge 12 (S303). A test pattern image is then displayed based on test pattern image data read out in S302 and palette data 72 read out in S303 (S304).

Next, a determination is made as to whether or not the cross key 38 has been operated in the upward direction (S305). When an operation in the upward direction is determined, the brightness n is incremented by 1 (S306). At this time, if the value for the brightness n is 5 or more (S307), an upper limit value of 4 is set (S308). A value for brightness n updated in this manner is then added to each palette number contained in data pattern image data readout in 5302 (S309). After this, a test pattern image is displayed (S304) based on test pattern image data for which the palette numbers are changed in S309 and palette data read out in S303 unless the button 42A for deciding brightness has been pushed (S310). Test pattern image data read out in 5302 can be displayed as color information corresponding to the nth palette group.

On the other hand, in S305, when it is determined that the cross key 38 has not been operated in the upward direction, it is determined whether or not the cross key 38 has been operated in a downward direction (S311). When an operation in the downward direction is determined, the brightness n is decremented by 1 (S312). At this time, if the value for the brightness n is zero or less (S313), a lower limit value of 0 is set (S314). A value for brightness n updated in this manner is then added to each palette number contained in data pattern image data read out in S302 (S309). After this, a test pattern image is displayed (S304) based on test pattern image data for which the palette numbers are changed in S309 and palette data read out in S303 unless the button 42A for deciding brightness has been pushed (S310).

Further, in S311, when it is determined that the cross key 38 is not operated in the downward direction, a determination is made as to whether the cross key 38 has been operated again in the upward direction (S305) unless the button 42a for deciding the brightness has been pressed (S310).

As described above, in the brightness adjustment process, the integer n expressing the brightness can be set in accordance with operation of the cross key 38 and button 42A by the player while presenting a test pattern image corresponding to each brightness to the player.

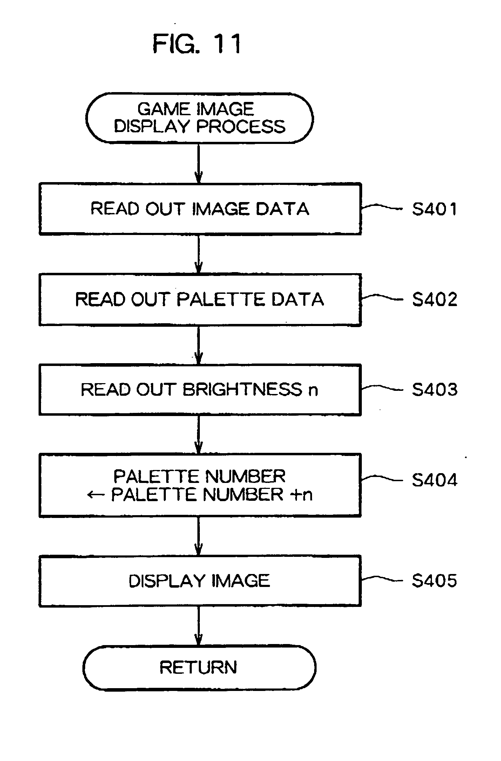

Next, a description is given of processing for displaying game images at the liquid crystal display panel 40 after starting the game. FIG. 11 is a flowchart showing game image display processing. As shown in FIG. 11, in this process, first, the palette number modifying unit 62 reads image data from the image data storage unit 66 (S401). This image data can be specified by a main routine (not shown). Next, the image display unit 64 reads palette data from the palette data storage unit 68 (S402). The palette data corresponds to image data read from the image data storage unit 66 by the palette number modifying unit 62. Next, the palette number modifying unit 62 reads out the brightness n stored in the brightness specifying unit 60 (S403). The brightness n is decided by the brightness adjustment process described above and is a value held in RAM 16 contained in the brightness specifying unit 60. The palette number modifying unit 62 adds values for brightness n read out in this manner to each palette number contained in image data read from the image data storage unit 66 (S404). Finally, the image display unit 64 displays game images at the liquid crystal display panel 40 based on palette data read in S402 and image data with palette numbers modified by the palette number modifying unit 62.

As described in the above, it is possible to display the game screen in accordance with brightness n specified by the brightness specifying unit 60. It is also possible even in this way to display the game screen with sufficient visibility even when the liquid crystal display panel 40 is not equipped with a backlight.

The present invention is by no means limited to the above embodiment.

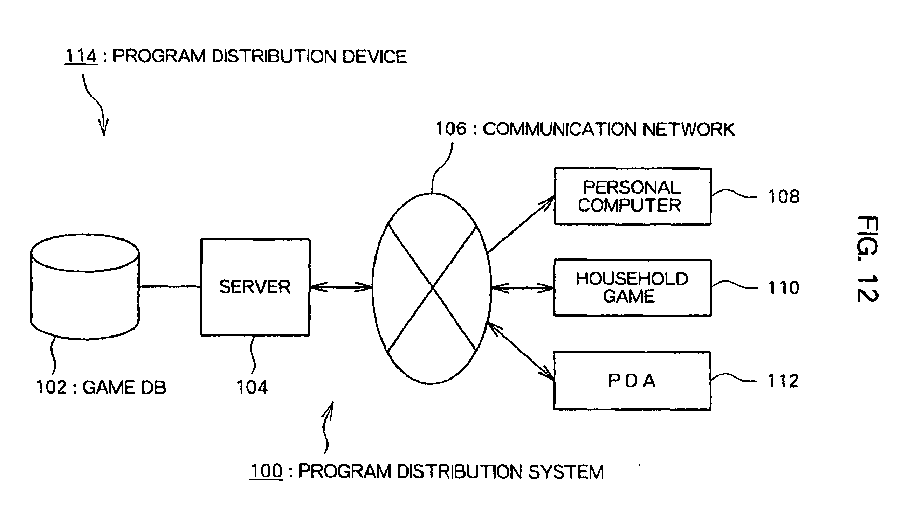

For example, in the above description, a program is supplied from an information storage media of a game cartridge 12 to portable game equipment 10 but the program can also be distributed to households etc. via a communication network. FIG. 12 is a view showing an overall configuration for a program distribution system using a communication network. A description is now given of a program distribution method of the present invention based on FIG. 12. As shown in FIG. 12, this program distribution system 100 includes a game database 102, server 104, communication network 106, personal computer 108, household game 110, and PDA (Personal Digital Assistant) 112. Of these, a program distribution device 114 is configured from the game database 102 and the server 104. The communication network 106 has a configuration of, for example, an internet or a cable television network. With this system, the game database 102 is stored with a program similar to the content stored in the game cartridge 12. A customer then makes a game distribution request using the personal computer 108, household game 110, or PDA 112 etc., and this is transmitted to the server 104 via the communication network 106. The server 104 reads the program from the game database 102 in response to the game distribution request and this is sent to the origin of the game distribution request that is the personal computer 108, household game 110, or PDA 112 etc. Here, game distribution takes place in response to a game distribution request but transmission may also be one-way from the server 104. Further, it is by no means necessary for all of the program required for the implementation of the game to be distributed through a one-time download (en bloc distribution), and it is also possible to distribute necessary portions according to the phase of the game (divided distribution). If game distribution via this kind of communication network 106 is adopted, then it is straightforward for the customer to acquire the program.

INDUSTRIAL APPLICABILITY

As described above, the present invention is applied to game equipment, personal computers, and portable telephones, etc., enables adjustment of brightness of game screens, and as a result increases visibility of game screens.

**Claims**

1.   A game device comprising:

> brightness specifying means for specifying brightness of a game screen;
> palette data acquisition means for acquiring palette data for a brightness designated by the brightness specifying means;
> image data storage means for storing image data; and
> image displaying means for displaying images at the game screen based on image data stored in the image data storage means and the palette data acquired by the palette data acquisition means, such that the brightness of the game screen is adjusted to the brightness designated by the brightness specifying means.

2.   The game device as disclosed in claim 1, wherein the palette data acquisition means acquires palette data for a brightness specified by the brightness specifying means from palette data corresponding to a reference brightness and palette data for one or more brightnesses after correction generated based on palette data for the reference brightness.

3.   The game device of claim 2,
further comprising palette data storage means for storing palette data for a reference brightness and palette data for one or more brightnesses after correction generated based on palette data for the reference brightness.

4.   The game device as disclosed in claim 2,
further comprising palette data storage means for storing palette data for a reference brightness; and the palette data acquisition means comprises means for generating palette data for a brightness specified by the brightness specifying means based on palette data stored in the palette data storage means.

5.   The game device as disclosed in claim 3, further comprising:

> means for storing test pattern image data;
> means for displaying a test pattern image corresponding to a brightness after an operation to increase or decrease brightness of the game screen is performed based on test pattern image data and palette data corresponding to brightness after the operation to increase or decrease brightness of the game screen is performed on the palette data stored in the palette data storage means, in the event that the operation to increase or decrease brightness of the game screen is performed by a player with the test pattern image in a displayed state based on the test pattern image data and one of the palette data stored in the palette data storage means;
> means for storing brightness in a storage means corresponding to the brightness of the test pattern image in the case that a brightness deciding operation is performed by a player with the test pattern image displayed; and

wherein the image display means is adapted to display images at the game screen based on image data stored in the image data storage means and palette data stored in the palette data storage means and corresponding to the brightness stored in the storage means.

6.   The game device as disclosed in claim 4, further comprising:

> means for storing test pattern image data;
> means for displaying a test pattern image corresponding to a brightness after an operation to increase or decrease brightness of the game screen is performed based on test pattern image data and palette data corresponding to brightness after the operation to increase or decrease brightness of the game screen is performed on palette data generated from palette data stored in the palette data storage means, in the event that the operation to increase or decrease brightness of the game screen is performed by a player with the test pattern image in a displayed state based on the test pattern image data and the palette data stored in the palette data storage means or the palette data generated from the palette data stored in the palette data storage means;
> means for storing brightness in a storage means corresponding to the brightness of the test pattern image in the case that a brightness deciding operation is performed by a player with the test pattern image displayed; and

wherein the image display means is adapted to display images at the game screen based on image data stored in the image data storage means and palette data generated from palette data stored in the palette data storage means and corresponding to the brightness stored in the storage means.

7. A game device comprising:

brightness specifying means for specifying brightness of a game screen;
palette data storage means for storing palette data comprising palette numbers and color information associated with each palette number, all or some of the palette numbers belong to one of a plurality of palette number groups, each palette number group being associated with different brightnesses;
image data storage means for storing image data where palette numbers belonging to one of the plurality of palette number groups is made to correspond to each pixel constituting an image;
palette number modifying means for, with image data stored at the image data storage means, changing palette numbers made to correspond to each pixel constituting the image to palette numbers belonging to a palette number group corresponding to a brightness specified by the brightness specifying means; and
image display means for displaying images at the game screen based on image data with palette numbers modified by the palette number modifying means and palette data stored in the palette data storage means, such that the brightness of the game screen is adjusted to the brightness designated by the brightness specifying means.

8. The game device as disclosed in claim 7, wherein color information made to correspond with at least one of the plurality of palette number groups is generated based on color information made to correspond with palette numbers belonging to another palette number group.

9. The game device as disclosed in claim 7, further comprising:

means for storing test pattern image data where palette numbers belonging to one of the plurality of palette number groups are made to correspond to each pixel constituting an image;
means for displaying a test pattern image corresponding to a brightness after an operation to increase or decrease brightness of the game screen is performed based on the palette data stored in the palette data storage means and test pattern image data acquired as a result of a prescribed value corresponding to a difference in brightness between brightness corresponding to a palette number group to which a palette number belongs and brightness after the operation to increase or decrease brightness of the game screen is performed being added or subtracted, with respect to palette numbers correlating each pixel constituting an image, in the even that the operation to increase or decrease brightness of the game screen is performed by a player with the test pattern image in a displayed state based on the test pattern image data and the palette data stored in the palette data storage means;
means for storing brightness in a storage means corresponding to the brightness of the test pattern image in the case that a brightness deciding operation is performed by a player with the test pattern image displayed;

wherein the palette number modifying means is adapted to, with image data stored at the image data storage means, add or subtract a prescribed value corresponding to a difference in brightness between brightness corresponding to a palette number group the palette number belongs to and brightness stored in the storage means with respect to a palette number correlating each of the pixels constituting the image.

10. A method for adjusting brightness of a game screen comprising the steps of:

specifying by brightness specifying means brightness of a game screen;
acquiring by palette data acquisition means palette data for a brightness designated by the brightness specifying means;
storing image data; and
displaying images at the game screen based on the stored image data and the palette data acquired by the palette data acquisition means, such that the brightness of the game screen is adjusted to the brightness designated by the brightness specifying means.

11. A method for adjusting brightness of a game screen comprising the steps of:

specifying by brightness specifying means brightness of a game screen;
storing by palette data storage means palette data comprising palette numbers and color information associated with each palette number, all or some of the palette numbers belong to one of a plurality of palette number groups, each palette number group being associated with different brightnesses;

storing by image data storage means image data where palette numbers belonging to one of the plurality of palette number groups is made to correspond to each pixel constituting an image;

changing by palette number modifying means, with image data stored at the image data storage means, palette numbers made to correspond to each pixel constituting the image to palette numbers belonging to a palette number group corresponding to a brightness specified by the brightness specifying means; and

displaying images at the game screen based on image data with palette numbers modified by the palette number modifying means and palette data stored in the palette data storage means, such that the brightness of the game screen is adjusted to the brightness designated by the brightness specifying means.

12. A program comprising program instructions adapted to perform all the steps of the method of claim 10 or 11 when the program is run on a computer.

13. An information storage medium for storing the program of claim 12.

**Patentansprüche**

1. Spielgerät umfassend:

Helligkeitspezifizierungsmittel zum Spezifizieren von Helligkeit eines Spielbildschirms; Palettendatenbeschaffungsmittel zum Beschaffen von Palettendaten für eine Helligkeit, die durch die Helligkeitspezifizierungsmittel bestimmt ist; Bilddatenspeichermittel zum Speichern von Bilddaten; und

Bildanzeigemittel zum Anzeigen von Bildern auf dem Spielbildschirm, die auf in den Bildspeichermitteln gespeicherten Bilddaten und auf den durch die Palettendatenbeschaffungsmittel beschafften Palettendaten derart basieren, dass die Helligkeit des Spielbildschirms auf die durch die Helligkeitspezfizierungsmittel bestimmte Helligkeit eingestellt ist.

2. Spielgerät wie in Anspruch 1 offenbart, wobei die Palettendatenbeschaffungsmittel Palettendaten für eine durch die Helligkeitspezifizierungsmittel spezifizierte Helligkeit beschaffen, aus Palettendaten, die einer Referenzhelligkeit entsprechen, und Palettendaten für eine oder mehrere Helligkeiten nach einer Korrektur, die basierend auf Palettendaten für die Referenzhelligkeit erzeugt wurde.

3. Spielgerät nach Anspruch 2, weiter umfassend Palettendatenspeichermittel zum Speichern von Palettendaten für eine Referenzhelligkeit und Palettendaten für eine oder mehrere Helligkeiten nach einer Korrektur, die basierend auf Palettendaten für die Referenzhelligkeit erzeugt wurde.

4. Spielgerät wie in Anspruch 2 offenbart, weiter umfassend Palettendatenspeichermittel zum Speichern von Palettendaten für eine Referenzhelligkeit; und

wobei die Palettendatenbeschaffungsmittel Mittel zum Erzeugen von Palettendaten für eine Helligkeit umfassen, die durch die Helligkeitspezifizierungsmittel basierend auf in den Palettendatenspeichermitteln gespeicherten Palettendaten spezifiziert ist.

5. Spielgerät wie in Anspruch 3 offenbart, weiter umfassend:

Mittel zum Speichern von Testmusterbilddaten; Mittel zum Anzeigen eines Testmusterbildes, das einer Helligkeit entspricht, nachdem eine Operation zum Erhöhen oder Vermindern von Helligkeit des Spielbildschirms durchgeführt wurde, basierend auf Testmusterbilddaten und Palettendaten, die einer Helligkeit entsprechen, nachdem die Operation zum Erhöhen oder Vermindern von Helligkeit des Spielbildschirms auf den in den Palettendatenspeichermittel gespeicherten Palettendaten durchgeführt wurde, falls die Operation zum Erhöhen oder Vermindern von Helligkeit des Spielbildschirms durch einen Spieler mit dem Testmusterbild in einem angezeigten Zustand durchgeführt wurde, der auf den Testmusterbilddaten und einen der in den Palettendatenspeichermitteln gespeicherten Palettendaten basiert; Mittel zum Speichern von Helligkeit in einem Speichermittel, die der Helligkeit des Testmusterbildes entspricht, falls eine Helligkeitsentscheidungsoperation durch einen Spieler mit dem angezeigten Testmusterbild durchgeführt wurde; und

wobei die Bildanzeigemittel geeignet sind, Bilder auf dem Spielbildschirm anzuzeigen, die auf in den Bilddatenspeichermitteln gespeicherten Bilddaten und auf in den Palettendatenspeichermitteln gespeicherten Palettendaten basieren und der in den Speichermitteln gespeicherten Helligkeit entsprechen.

6. Spielgerät wie in Anspruch 4 offenbart, weiter umfassend:

Mittel zum Speichern von Testmusterbilddaten; Mittel zum Anzeigen eines Testmusterbildes, das einer Helligkeit entspricht, nachdem eine Operation zum Erhöhen oder Vermindern von Helligkeit des Spielbildschirms durchgeführt wurde, basierend auf Testmusterbilddaten und Palettendaten, die einer Helligkeit entsprechen, nachdem die Operation zum Erhöhen oder Vermindern von Helligkeit des Spielbildschirms auf Palettendaten durchgeführt wurde, die aus den in den Palettendatenspeichermittel gespeicherten Palettendaten erzeugt wurden, falls die Operation zum Erhöhen oder Vermindern von Helligkeit des Spielbildschirms durch einen Spieler mit dem Testmusterbild in einem angezeigten Zustand durchgeführt wurde, der auf den Testmusterbilddaten und den Palettendaten basiert, die in den Palettendatenspeichermitteln gespeichert sind oder auf den Palettendaten basieren, die aus in den Palettendatenspeichermitteln gespeicherten Palettendaten erzeugt wurden; Mittel zum Speichern von Helligkeit in einem Speichermittel, die der Helligkeit des Testmusterbildes entspricht, falls eine Helligkeitsentscheidungsoperation durch einen Spieler mit dem angezeigten Testmusterbild durchgeführt wurde; und

wobei die Bildanzeigemittel geeignet sind, Bilder auf dem Spielbildschirm anzuzeigen, die auf in den Bilddatenspeichermitteln gespeicherten Bilddaten und auf Palettendaten basieren, die aus in den Palettendatenspeichermitteln gespeicherten Palettendaten erzeugt wurden, und der in den Speichermitteln gespeicherten Helligkeit entsprechen.

7. Spielgerät umfassend:

Helligkeitspezifizierungsmittel zum Spezifizieren von Helligkeit eines Spielbildschirms; Palettendatenspeichermittel zum Speichern von Palettendaten, die Palettenzahlen und jeder Palettenzahl zugeordnete Farbinformationen umfassen, wobei alle oder einige der Palettenzahlen zu einer aus einer Mehrzahl von Palettenzahlengruppen gehören, wobei jede Palettenzahlengruppe verschiedenen Helligkeiten zugeordnet ist; Bilddatenspeichermittel zum Speichern von Bilddaten, wobei Palettenzahlen, die zu einer aus der Mehrzahl von Palettenzahlengruppen gehören, gebildet sind, um jedem bilderzeugenden Pixel zu entsprechen; Palettenzahlmodifizierungsmittel zum Ändern von Palettenzahlen mit in den Bilddatenspeichermitteln gespeicherten Bilddaten, wobei die Palettenzahlen gebildet sind, jedem bilderzeugenden Pixel zu entsprechen, zu Palettenzahlen, die zu einer Palettenzahlengruppe gehören, die einer durch die Helligkeitspezifizierungsmittel spezifizierten Helligkeit entspricht; und Bildanzeigemittel zum Anzeigen von Bildern auf dem Spielbildschirm, die auf Bilddaten mit durch die Palettendatenmodifizierungsmittel modifizierten Palettenzahlen und in den Palettendatenspeichermitteln gespeichert Palettendaten derart basieren, dass die Helligkeit des Spielbildschirms auf die durch die Helligkeitspezifizierungsmittel bestimmte Helligkeit eingestellt ist.

8. Spielgerät wie in Anspruch 7 offenbart, wobei Farbinformationen, die gebildet wurden, um wenigstens einer aus der Mehrzahl der Palettenzahlengruppen zu entsprechen, erzeugt werden, basierend auf Farbinformationen, die gebildet wurden, um Palettenzahlen zu entsprechen, die zu einer anderen Palettenzahlengruppe gehören.

9. Spielgerät wie in Anspruch 7 offenbart, weiter umfassend:

Mittel zum Speichern von Testmusterbilddaten, in denen Palettenzahlen, die zu einer aus der Mehrzahl der Palettenzahlengruppen gehören, gebildet sind, um jedem bilderzeugenden Pixel zu entsprechen; Mittel zum Anzeigen eines Testmusterbildes, das einer Helligkeit entspricht, nachdem eine Operation zum Erhöhen oder Vermindern von Helligkeit des Spielbildschirms durchgeführt wurde, basierend auf den in den Palettendatenspeichermitteln gespeicherten Palettendaten und Testmusterbilddaten, die aufgrund eines festgesetzten Wertes beschafft wurden, der einer Differenz in Helligkeit zwischen Helligkeit, die einer Palettenzahlengruppe entspricht, zu der einen Palettenzahl gehört, und Helligkeit nachdem die Operation zum Erhöhen oder Vermindern der Helligkeit des Spielbildschirms durchgeführt wurde, entspricht, die addiert oder subtrahiert wird, in Bezug auf Palettenzahlen, die mit jedem bilderzeugenden Pixel korreliert sind, falls die Operation zum Erhöhen oder Vermindern von Helligkeit des Spielbildschirms durch einen Spieler mit dem Testmusterbild in einem angezeigten Zustand durchgeführt wurde, der auf den Testmusterbilddaten und den in den Palettendatenspeichrermitteln gespeicherten Palettendaten basiert; Mittel zum Speichern von Helligkeit in einem Speichermittel, die der Helligkeit des Testmusterbildes enstpricht, falls eine Helligkeitsentscheidungsoperation durch einen Spieler mit dem angezeigten Testmusterbild durchgeführt wurde;

wobei die Palettenzahlmodifizierungsmittel geeignet sind, mit in den Bilddatenspeichermitteln gespeicherten Bilddaten einen festgesetzten Wert zu addieren oder zu subtrahieren, der einer Differenz in Helligkeit zwischen Helligkeit, die einer Palettenzahlengruppe entspricht, zu der die Palettenzahl gehört, und Helligkeit, die in den Speichermitteln in Bezug auf eine Palettenzahl gespeichert ist, die mit jedem der bilderzeugenden Pixel korreliert ist, entspricht.

10. Verfahren zum Einstellen von Helligkeit eines Spielbildschirms, umfassend die Schritte von:

Spezifizieren von Helligkeit eines Spielbildschirms durch Helligkeitspezifizierungsmittel; Beschaffen von Palettendaten durch Palettendatenbeschaffungsmittel, für eine Helligkeit, die durch die Helligkeitspezifizierungsmittel bestimmt ist; Speichern von Bilddaten; und Anzeigen von Bildern auf dem Spielbildschirm, die auf in den Bildspeichermitteln gespeicherten Bilddaten und auf den durch die Palettendatenbeschaffungsmittel beschafften Palettendaten derart basieren, dass die Helligkeit des Spielbildschirms auf die durch die Helligkeitspezifizierungsmittel bestimmte Helligkeit eingestellt ist.

11. Verfahren zum Einstellen von Helligkeit eines Spielbildschirms, umfassend die Schritte von:

Spezifizieren von Helligkeit eines Spielbildschirms durch Helligkeitspezifizierungsmittel; Speichern von Palettendaten durch Palettendatenspeichermittel, wobei die Palettendaten Palettenzahlen und jeder Palettenzahl zugeordnete Farbinformationen umfassen, wobei alle oder einige der Palettenzahlen zu einer aus einer Mehrzahl von Palettenzahlengruppen gehören, wobei jede Palettenzahlengruppe verschiedenen Helligkeiten zugeordnet ist; Speichern von Bilddaten durch Bilddatenspeichermittel, in denen Palettenzahlen, die zu einer aus der Mehrzahl von Palettenzahlengruppen gehören, gebildet sind, um jedem bilderzeugenden Pixel zu entsprechen; Ändern von Palettenzahlen mit Bilddaten, die in den Bilddatenspeichermitteln gespeichert sind, durch Palettenzahlmodifizierungsmittel, wobei die Palettenzahlen gebildet sind, jedem bilderzeugenden Pixel zu entsprechen, zu Palettenzahlen, die zu einer Palettenzahlengruppe gehören, die einer durch die Helligkeitspezifizierungsmittel spezifizierten Helligkeit entspricht; und Anzeigen von Bildern auf dem Spielbildschirm, die auf Bilddaten mit durch die Palettendatenmodifzierungsmittel modifizierten Palettenzahlen und in den Palettendatenspeichermitteln gespeicherten Palettendaten derart basieren, dass die Helligkeit des Spielbildschirms auf die durch die Helligkeitspezifizierungsmittel bestimmte Helligkeit eingestellt ist.

12. Programm, das Programmbefehle umfasst, die geeignet sind, alle die Schritte des Verfahrens von Anspruch 10 oder 11 durchzuführen, wenn das Programm auf einem Computer ausgeführt wird.

13. Informationsspeichermedium zum Speichern des Programms von Anspruch 12.

**Revendications**

1. Dispositif de jeu comprenant :

un moyen de spécification de luminosité pour spécifier la luminosité d'un écran de jeu ; un moyen d'acquisition de données de palettes pour acquérir des données de palettes destinées à une luminosité désignée par le moyen de spécification de luminosité ; un moyen de stockage de données d'images pour stocker des données d'images ; et un moyen d'affichage d'images pour afficher des images sur l'écran de jeu sur la base de données d'images stockées dans le moyen de stockage de données d'images et des données de palettes acquises par le moyen d'acquisition de données de palettes, de façon que la luminosité de l'écran de jeu soit ajustée à la luminosité désignée par le moyen de spécification de luminosité.

2. Dispositif de jeu selon la revendication 1, dans lequel le moyen d'acquisition de données de palettes acquiert des données de palettes destinées à une luminosité spécifiée par le moyen de spécification de luminosité à partir de données de palettes correspondant à une luminosité de référence et de données de palettes destinées à une ou plusieurs luminosités après la correction générée sur la base de données de palettes pour la luminosité de référence.

3. Dispositif de jeu selon la revendication 2, comprenant en outre un moyen de stockage de données de palettes pour stocker des données de palettes destinées à une luminosité de référence et des données de palettes destinées à une ou plusieurs luminosités après la correction générée sur la base de données de palettes pour la luminosité de référence.

4. Dispositif de jeu selon la revendication 2, comprenant en outre un moyen de stockage de données de palettes destiné à stocker des données de palettes pour une luminosité de référence ; et

le moyen d'acquisition de données de palettes comprend un moyen pour générer des données de palettes destinées à une luminosité spécifiée par le moyen de spécification de luminosité sur la base de données de palettes stockées dans le moyen de stockage de données de palettes.

**5.** Dispositif de jeu selon la revendication 3, comprenant en outre :

un moyen destiné à stocker des données d'images de motifs de test ;

un moyen destiné à afficher une image de motif de test correspondant à une luminosité après qu'une opération destinée à augmenter ou à réduire la luminosité de l'écran de jeu a été effectuée sur la base de données d'images de motifs de test et de données de palettes correspondant à la luminosité obtenue après que l'opération destinée à augmenter ou à réduire la luminosité de l'écran de jeu a été effectuée sur les données de palettes stockées dans le moyen de stockage de données de palettes, dans le cas où l'opération destinée à augmenter ou à réduire la luminosité de l'écran de jeu est effectuée par un joueur lorsque l'image de motif de test est dans un état affiché sur la base des données d'images de motifs de test et de l'une des données de palettes stockées dans le moyen de stockage de données de palettes ;

un moyen destiné à stocker la luminosité dans un moyen de stockage correspondant à la luminosité de l'image de motif de test dans le cas où une opération de choix de luminosité est effectuée par un joueur lorsque l'image de motif de test est affichée ; et

dans lequel le moyen d'affichage d'images est conçu pour afficher des images sur l'écran de jeu sur la base de données d'images stockées dans le moyen de stockage de données d'images et de données de palettes stockées dans le moyen de stockage de données de palettes et correspondant à la luminosité stockée dans le moyen de stockage.

**6.** Dispositif de jeu selon la revendication 4, comprenant en outre :

un moyen pour stocker des données d'images de motifs de test ;

un moyen pour afficher une image d'un motif de test correspondant à une luminosité après qu'une opération destinée à augmenter ou à réduire la luminosité de l'écran de jeu a été effectuée sur la base de données d'images de motifs de test et de données de palettes correspondant à la luminosité obtenue après que l'opération destinée à augmenter ou à réduire la luminosité de l'écran de jeu a été effectuée sur des données de palettes générées à partir de données de palettes stockées dans le moyen de stockage de données de palettes, dans le cas où l'opération destinée à augmenter ou à réduire la luminosité de l'écran de jeu est effectuée par un joueur lorsque l'image de motif de test est dans un état affiché sur la base des données d'images de motifs de test et des données de palettes stockées dans le moyen de stockage de données de palettes ou des données de palettes générées à partir des données de palettes stockées dans le moyen de stockage de données de palettes ;

un moyen destiné à stocker la luminosité dans un moyen de stockage correspondant à la luminosité de l'image de motif de test dans le cas où l'opération de choix de la luminosité est effectuée par un joueur lorsque l'image de motif de test est affichée ; et

dans lequel le moyen d'affichage d'images est conçu pour afficher des images sur l'écran de jeu sur la base de données d'images stockées dans le moyen de stockage de données d'images et de données de palettes générées à partir de données de palettes stockées dans le moyen de stockage de données de palettes et correspondant à la luminosité stockée dans le moyen de stockage.

**7.** Dispositif de jeu comprenant :

un moyen de spécification de luminosité pour spécifier la luminosité d'un écran de jeu ;

un moyen de stockage de données de palettes pour stocker des données de palettes comprenant des numéros de palettes et des informations de couleurs associées à chaque numéro de palette, tout ou partie des numéros de palettes appartenant à l'un d'une pluralité de groupes de numéros de palettes, chaque groupe de numéros de palettes étant associé à des luminosités différentes ;

un moyen de stockage de données d'images destiné à stocker des données d'images pour lesquelles des numéros de palettes appartenant à l'un de la pluralité de groupes de numéros de palettes sont amenés à correspondre à chaque pixel constituant une image ;

un moyen de modification de numéro de palette destiné à modifier, avec des données d'images stockées dans le moyen de stockage de données d'images, des numéros de palettes amenés à correspondre à chaque pixel constituant l'image en des numéros de palettes appartenant à un groupe de numéros de palettes correspondant à une luminosité spécifiée par le moyen de spécification de luminosité ; et

un moyen d'affichage d'images destiné à afficher des images sur l'écran de jeu sur la base de données d'images, les numéros de palettes étant modifiés par le moyen de modification de numéro de palette et les données de palettes étant stockées dans le moyen de stockage de données de palettes, de façon que la luminosité de l'écran de jeu soit ajustée à la luminosité désignée par le moyen de spécification de luminosité.

8. Dispositif de jeu selon la revendication 7, dans lequel des informations de couleurs amenées à correspondre à au moins l'un de la pluralité de groupes de numéros de palettes sont générées sur la base d'informations de couleurs amenées à correspondre à des numéros de palettes appartenant à un autre groupe de numéros de palettes.

9. Dispositif de jeu selon la revendication 7, comprenant en outre :

un moyen destiné à stocker des données d'images de motifs de test pour lesquelles des numéros de palettes appartenant à l'un de la pluralité de groupes de numéros de palettes sont amenés à correspondre à chaque pixel constituant une image ;

un moyen destiné à afficher une image de motif de test correspondant à une luminosité après qu'une opération destinée à augmenter ou à réduire la luminosité de l'écran de jeu a été effectuée sur la base des données de palettes stockées dans le moyen de stockage de données de palettes et que des données d'images de motifs de test acquises comme résultat de l'addition ou de la soustraction d'une valeur prescrite correspondant à une différence de luminosité entre la luminosité correspondant à un groupe de numéros de palettes auquel appartient un numéro de palette et la luminosité obtenue après que l'opération destinée à augmenter ou à réduire la luminosité de l'écran de jeu a été effectuée, à des numéros de palettes corrélés avec chaque pixel constituant une image, dans le cas où l'opération destinée à augmenter ou à réduire la luminosité de l'écran de jeu a été effectuée par un joueur lorsque l'image de motif de test est dans un état affiché sur la base des données d'images de motifs de test et des données de palettes stockées dans le moyen de stockage de données de palettes ;

un moyen destiné à stocker une luminosité dans un moyen de stockage correspondant à la luminosité de l'image de motif de test dans le cas où une opération de choix de luminosité a été effectuée par un joueur lorsque l'image de motif de test est affichée ;

dans lequel le moyen de modification du numéro de palette est conçu pour additionner ou soustraire à des données d'images stockées dans le moyen de stockage de données d'images, une valeur prescrite correspondant à une différence de luminosité entre la luminosité correspondant à un groupe de numéros de palettes auquel appartient le numéro de palette et la luminosité stockée dans le moyen de stockage, à un numéro de palette corrélé avec chacun des pixels constituant l'image.

10. Procédé d'ajustement de la luminosité d'un écran de jeu, comprenant les étapes consistant à :

spécifier, à l'aide d'un moyen de spécification de luminosité, la luminosité d'un écran de jeu ;
acquérir, à l'aide d'un moyen d'acquisition de données de palettes, des données de palettes correspondant à une luminosité désignée par le moyen de spécification de luminosité ;
stocker des données d'images ; et
afficher des images sur l'écran de jeu sur la base des données d'images stockées et des données de palettes acquises par le moyen d'acquisition de données de palettes de façon que la luminosité de l'écran de jeu soit ajustée à la luminosité désignée par le moyen de spécification de luminosité.

11. Procédé d'ajustement de la luminosité d'un écran de jeu, comprenant les étapes consistant à :

spécifier, à l'aide d'un moyen de spécification de luminosité, la luminosité d'un écran de jeu ;
stocker, à l'aide d'un moyen de stockage de données de palettes, des données de palettes comprenant des numéros de palettes et des informations de couleurs associées à chaque numéro de palette, tout ou partie des numéros de palettes appartenant à l'un d'une pluralité de groupes de numéros de palettes, chaque groupe de numéros de palettes étant associé à des luminosités différentes ;
stocker, à l'aide d'un moyen de stockage de données d'images, des données d'images pour lesquelles des numéros de palettes appartenant à l'un de la pluralité de groupes de numéros de palettes sont amenés à correspondre à chaque pixel constituant une image ;
modifier à l'aide d'un moyen de modification de numéro de palette, en utilisant des données d'image stockées dans le moyen de stockage de données d'images, des numéros de palettes amenés à correspondre à chaque pixel constituant l'image en des numéros de palettes appartenant à un groupe de numéros de palettes correspondant à une luminosité spécifiée par le moyen de spécification de luminosité ; et afficher des images sur l'écran de jeu sur la base de données d'images lorsque les numéros de palettes sont modifiés par le moyen de modification de numéro de palette et lorsque les données de palettes sont stockées dans le moyen de stockage de données de palettes, de façon que la luminosité de l'écran de jeu soit ajustée à la luminosité désignée par le moyen de spécification de luminosité.

12. Programme comprenant des instructions de programme conçues pour mettre en oeuvre toutes les étapes du procédé de la revendication 10 ou 11 lorsque le programme est exécuté sur un ordinateur.

13. Support de stockage d'informations destiné à stocker le programme de la revendication 12.

# FIG. 1

10 : PORTABLE GAME EQUIPMENT

## FIG. 2

12 : GAME CARTRIDGE

10 : PORTABLE GAME EQUIPMENT

COMMUNICATION UNIT 34
I/O 36
I/O 24
OPERATION UNIT 26
AUDIO PROCESSOR 35
33
I/O 20
22
CARTRIDGE I/F 32
ROM 18
CPU 14
RAM 16
28

# FIG. 3

(a)

(b)

(c)

(d)

(e)

# FIG. 4

10 : PORTABLE GAME EQUIPMENT

Diagram blocks:
- 43 BRIGHTNESS SPECIFYING UNIT
- 45 PALETTE DATA ACQUISITION UNIT
- 46 PALETTE DATA STORAGE UNIT
- 47 IMAGE DISPLAY UNIT
- 48 IMAGE DATA STORAGE UNIT

# FIG. 5

(a)

50

(b)

52-4

52-3

52-2

52-1

52-0

| No. | R G B |
|-----|-------|
| 1 | — — — — — |
| 2 | — — — — — |
| 3 | — — — — — |
| 4 | — — — — — |

## FIG. 6

```
        ┌─────────────────────────┐
        │      BRIGHTNESS         │
        │   ADJUSTMENT PROCESS    │
        └─────────────────────────┘
                    │
        ┌─────────────────────────┐
        │     BRIGHTNESS n←0      │── S101
        └─────────────────────────┘
                    │
        ┌─────────────────────────┐
        │   READ OUT TEST PATTERN │── S102
        │       IMAGE DATA        │
        └─────────────────────────┘
                    │
        ┌─────────────────────────┐
        │   READ OUT 0th PALETTE  │── S103
        │          DATA           │
        └─────────────────────────┘
                    │
        ┌─────────────────────────┐
        │   DISPLAY TEST PATTERN  │── S104
        │          IMAGE          │
        └─────────────────────────┘
                    │
         ╱─────────────────────╲   N
        ⟨ INCREASE IN BRIGHTNESS ⟩────────────────┐
         ╲    OPERATED?        ╱── S105           │
                    │ Y                            │
            S106 ───┤                    ╱──────────────────────╲  N
        ┌─────────────────────────┐  S111─⟨  REDUCTION IN        ⟩──┐
        │       n ← n + 1         │     ⟨ BRIGHTNESS OPERATED?  ⟩  │
        └─────────────────────────┘      ╲──────────────────────╱  │
                    │                            │ Y  ── S112       │
            S107 ───┤                 ┌─────────────────────────┐   │
    N    ╱──────────────────╲         │        n ← n - 1        │   │
    ┌───⟨      n ≧ 5 ?        ⟩        └─────────────────────────┘   │
    │    ╲──────────────────╱                   │ ── S113           │
    │           │ Y  ── S108          ┌─────────────────────────┐   │
    │  ┌─────────────────────────┐    │        n < 0            │   │
    │  │        n ← 4            │    └─────────────────────────┘   │
    │  └─────────────────────────┘               │ ── S114          │
    │           │                     ┌─────────────────────────┐   │
    │  ┌─────────────────────────┐    │        n ← 0            │   │
    └─►│   READ OUT nth PALETTE  │    └─────────────────────────┘   │
       │          DATA           │               │                  │
       └─────────────────────────┘── S109        │                  │
                    │                             │                  │
    N    ╱──────────────────────╲                                   │
    ┌───⟨  BRIGHTNESS DECIDED?    ⟩── S110◄───────┘◄─────────────────┘
    │    ╲──────────────────────╱
    │           │ Y
    │  ┌─────────────────┐
    │  │     RETURN      │
    │  └─────────────────┘
    └──► (back to S104)
```

# FIG. 7

```
        ┌─────────────────────────┐
        │  GAME IMAGE DISPLAY     │
        │       PROCESS           │
        └─────────────────────────┘
                    │
                    ▼
        ┌─────────────────────────┐
        │   READ OUT IMAGE DATA   │ ──── S201
        └─────────────────────────┘
                    │
                    ▼
        ┌─────────────────────────┐
        │   READ OUT BRIGHTNESS n │ ──── S202
        └─────────────────────────┘
                    │
                    ▼
        ┌─────────────────────────┐
        │ READ OUT nth PALETTE DATA│ ──── S203
        └─────────────────────────┘
                    │
                    ▼
        ┌─────────────────────────┐
        │      DISPLAY IMAGE      │ ──── S204
        └─────────────────────────┘
                    │
                    ▼
        ┌─────────────────────────┐
        │        RETURN           │
        └─────────────────────────┘
```

# FIG. 8

BRIGHTNESS SPECIFYING UNIT — 60

PALETTE NUMBER MODIFYING UNIT — 62

IMAGE DISPLAY UNIT — 64

IMAGE DATA STORAGE UNIT — 66

PALETTE DATA STORAGE UNIT — 68

10 : PORTABLE GAME EQUIPMENT

# FIG. 9

(a)

70

(b)

| 6 | 6 | 6 | 6 | 6 | 6 |
|---|---|---|---|---|---|
| 6 | 1 | 1 | 1 | 1 | 1 |
| 6 | 6 | 6 | 1 | 1 | 1 |
| 11 | 11 | 11 | 1 | 1 | 1 |
| 11 | 11 | 11 | 11 | 11 | 11 |

70

(c)

| No. | R G B |
|---|---|
| 1 | ——————— |
| 2 | ——————— |
| 3 | ——————— |
| 4 | ——————— |
| 5 | ——————— |
| 6 | ——————— |
| 7 | ——————— |
| 8 | ——————— |
| 9 | ——————— |
| 1 0 | ——————— |
| 1 1 | ——————— |
| 1 2 | ——————— |
| 1 3 | ——————— |

72

## FIG. 10

```
        BRIGHTNESS
   ADJUSTMENT PROCESS

     BRIGHTNESS n ← 0          ── S301

      READ OUT TEST            ── S302
   PATTERN IMAGE DATA

   READ OUT PALETTE DATA       ── S303

   DISPLAY TEST PATTERN        ── S304
          IMAGE
```

INCREASE IN BRIGHTNESS   N
      OPERATED?         ── S305

Y   ── S306

n ← n + 1

── S307

N    n ≧ 5 ?

Y    ── S308

n ← 4

PALETTE NUMBER
← PALETTE NUMBER + n
── S309

N    BRIGHTNESS DECIDED?    ── S310

Y

RETURN

── S311
REDUCTION IN          N
BRIGHTNESS OPERATED?

Y    ── S312

n ← n - 1

── S313

n < 0

── S314

n ← 0

# FIG. 11

```
        ┌─────────────────────┐
        │    GAME IMAGE       │
        │  DISPLAY PROCESS    │
        └─────────────────────┘
                  │
                  ▼
        ┌─────────────────────┐
        │  READ OUT IMAGE DATA│────── S401
        └─────────────────────┘
                  │
                  ▼
        ┌─────────────────────┐
        │ READ OUT PALETTE DATA│────── S402
        └─────────────────────┘
                  │
                  ▼
        ┌─────────────────────┐
        │ READ OUT BRIGHTNESS n│────── S403
        └─────────────────────┘
                  │
                  ▼
        ┌─────────────────────┐
        │   PALETTE NUMBER    │────── S404
        │ ← PALETTE NUMBER +n │
        └─────────────────────┘
                  │
                  ▼
        ┌─────────────────────┐
        │    DISPLAY IMAGE    │────── S405
        └─────────────────────┘
                  │
                  ▼
        ┌─────────────────────┐
        │       RETURN        │
        └─────────────────────┘
```

EP 1 488 833 B1

**FIG. 12**

114 : PROGRAM DISTRIBUTION DEVICE

106 : COMMUNICATION NETWORK

| PERSONAL COMPUTER | — 108 |

| HOUSEHOLD GAME | — 110 |

| P D A | — 112 |

SERVER

102 : GAME DB    104

100 : PROGRAM DISTRIBUTION SYSTEM

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5265443 A

**Non-patent literature cited in the description**

- *PATENT ABSTRACTS OF JAPAN,* 19 January 1994, vol. 018, 036 (P-1678